# EUROPÄISCHE PATENTSCHRIFT

(11) **EP 3 122 604 B1**
(45) Veröffentlichungstag und Bekanntmachung des Hinweises auf die Patenterteilung: **14.03.2018**
(21) Anmeldenummer: 15723661.3
(22) Anmeldetag: 05.05.2015
(51) Int. Cl.: B60T 13/74, F16D 65/00

(54) **KRAFTFAHRZEUGAKTUATOR, INSBESONDERE BREMSAKTUATOR**
MOTOR VEHICLE ACTUATOR, IN PARTICULAR BRAKE ACTUATOR
ACTIONNEUR DE VÉHICULE À MOTEUR, EN PARTICULIER ACTIONNEUR DE FREIN

(30) Priorität: 13.05.2014 DE 102014106732
(43) Veröffentlichungstag der Anmeldung: 01.02.2017
(73) Patentinhaber: Küster Holding GmbH, 35630 Ehringshausen (DE)
(72) Erfinder: HAUSTEIN, Martina, 35781 Weilburg (DE); KELLER, Oliver, 56477 Nister-Möhrendorf (DE); FRITZ, Axel, 35435 Wettenberg (DE); KRAMER, Thomas, 35232 Dautphetal (DE)
(74) Vertreter: Müller, Eckhard
(86) Internationale Anmeldenummer: PCT/EP2015/059800
(87) Internationale Veröffentlichungsnummer: WO 2015/173066

(56) Entgegenhaltungen:
- WO-A1-2011/076366
- DE-A1-102004 048 700
- US-B2- 7 021 415

## Beschreibung

Die Erfindung betrifft einen Kraftfahrzeugaktuator, insbesondere Bremsaktuator, nach dem Oberbegriff des Patentanspruchs 1.

Aus der US 7,021,415 B2 ist bereits ein derartiger Kraftfahrzeugaktuator, insbesondere ein Bremsaktuator bekannt. Dieser ist als elektrisch angetriebener Bremsaktuator ausgeführt, der einen Elektromotor zur Erzeugung eines Drehmomentes und eine Einrichtung zur Drehmomentübertragung sowie ein Getriebe umfasst, auf welches das Drehmoment übertragen wird. Bei diesem Bremsaktuator ist die Drehmomentübertragungseinrichtung als Antriebsriemen ausgebildet, der zum einen mit einem auf der Antriebswelle des Elektromotors angeordneten Stirnzahnrad und zum anderen mit einem auf die Antriebswelle des Getriebes aufgesetzten weiteren Stirnzahnrades in Wirkverbindung steht. Sowohl das Getriebe als auch der Elektromotor und die Drehmomentübertragungseinrichtung sind dabei in einem gemeinsamen Gehäuse angeordnet, welches aus einer Aufnahme und einem Gehäusedeckel gebildet ist. Innerhalb des Gehäuses ist dabei sowohl der Motor als auch das Getriebe auf einer als Hilfsrahmen ausgebildeten Halteeinrichtung angeordnet.

Damit während des Betriebes des Kraftfahrzeuges aufgrund von Schwingungen und dergleichen Vorgänge die Geräuschbildung durch Bewegung der einzelnen Teile innerhalb des Gehäuses des Bremsaktuators minimiert werden, sind dabei verschiedene Feder- und Dämpfungselemente zwischen den einzelnen Bauteilen, wie beispielsweise zwischen der Halteeinrichtung und dem Elektromotor sowie der Halteeinrichtung und den Gehäusedeckel angeordnet. Diese einzelnen Feder- und Schwingungselemente sind allesamt als separate Bauteile ausgeführt, sodass jedes einzelne Element während der Montage separat gehandhabt werden muss. Hierdurch ist der Montageaufwand erheblich, und es müssen auch eine Vielzahl einzelner verschiedener Teile zur Fertigung des Bremsaktuators vorgehalten werden.

In der WO 2011/076366 A1 wird ein Halterahmen in einem Kraftfahrzeugaktuator beschrieben, an den Dämpfungselemente angebracht werden. Die Dämpfungselemente können verschiedene geometrische Formen annehmen und zwischen Halterahmen und Gehäusedeckel eingespannt werden, wodurch eine dämpfende Lagerung im Gehäusedeckel erfolgen soll. Die Dämpfungselemente sind separate Bauteile, die lose einspannbar sind oder mit verschiedensten Methoden am Halterahmen befestigt werden können.
Aus der DE 10 2004 048 700 A1 ist ein Halterahmen für einen Aktuator bekannt, wobei der Halterahmen ausschließlich über Dämpfungselemente mit einem Gehäuse in Verbindung steht, sodass nachteilige Störgeräusche und Schwingungen unterdrückt werden. Die Dämpfungselemente sind bevorzugt als Gummiteile ausgeführt.

Aus der DE 10 064 803 C1 ist ein Montageelement in einem elektromotorischen Stellelement bekannt. Das Montageelement ist scheibenförmig mit einer Öffnung zum Durchtritt der Abtriebs-Welle des dahin axial anliegenden Motors ausgestaltet. Am Gehäuse drehfest gehaltert soll diese Scheibe außerdem mit dem Lagerschild des Motors über achsparallele Vorsprünge bzw. Einstiche in formschlüssigem Eingriff stehen, so dass der Motor an einem Verdrehen gegenüber dem Gehäuse gehindert werden soll.
Es ist Aufgabe der Erfindung, einen Fahrzeugaktuator nach dem Oberbegriff des Patentanspruchs 1 derart weiterzubilden, dass eine vereinfachte Montage stattfinden kann, wobei gleichzeitig auch eine Bauteilreduzierung erreicht und eine ungewollte Geräuschentwickelung vermieden werden soll. Gelöst wird diese Aufgabe durch einen Kraftfahrzeugaktuator mit allen Merkmalen des Patentanspruchs 1. Vorteilhafte Ausgestaltungen der Erfindung finden sich in den Unteransprüchen.
Der erfindungsgemäße Kraftfahrzeugaktuator weist ein aus einer Aufnahme und einem als Grundträger ausgebildeten Gehäusedeckel bestehendes Gehäuse auf, in dem ein Elektromotor und ein damit über eine Drehmomentübertragungseinrichtung gekoppeltes Getriebe angeordnet sind. Dabei ist zur Anordnung des Elektromotors innerhalb des Gehäuses ein auf dem Gehäuse anordenbarer Halterahmen vorgesehen. Der Halterahmen ist als Dämpfungs- und/oder Federeinrichtung ausgebildet und weist einen Grundrahmen auf, an den wenigstens ein Dämpfungs- und/oder Federelement angeformt ist. Der erfindungsgemäße Kraftfahrzeugaktuator zeichnet sich dadurch aus, dass das wenigstens eine Dämpfungs- und/oder Federelement einstückig mit dem Grundrahmen ausgebildet ist.

Hierdurch lassen sich die Feder- und Dämpfungseigenschaften des Halterahmens in einfacher Art und Weise realisieren. Es wird in einfacher Weise eine Bauteilereduzierung erreicht, welche zudem zu einer deutlich vereinfachteren Montage des Kraftfahrzeugaktuators führt. Damit die für einen entsprechenden Komfort notwendige Geräuschminimierung während des Betriebes eines derartigen Kraftfahrzeugaktuators gegeben ist, ist es erfindungsgemäß nicht mehr notwendig, separate Feder- und/oder Dämpfungselemente bei der Montage zu berücksichtigen, da Halterahmen und Dämpfungs- und/oder Federelementen somit ein einziges Bauteil darstellen, das neben der Halterung eine entsprechende Geräuschminimierung während des Betriebes des Kraftfahrzeugaktuators sicherstellt.

Dabei hat es sich als vorteilhaft erwiesen, den Halterahmen zusammen mit den Dämpfungs- und/oder Federelementen aus einem Kunststoff in einem Spritzgussverfahren herzustellen. Solche Verfahren sind technisch ausgereift, so dass die gewünschten Feder-und Dämpfungseigenschaften des Halterahmens an jeglichen Kraftfahrzeugaktuatoren entsprechend seiner Charakteristik angepasst werden kann.

Erfindungsgemäß weist der Halterahmen eine Halteeinrichtung für den Elektromotor auf, wobei die Halteeinrichtung vorzugsweise eine Anlagefläche aufweist, auf welcher der Elektromotor mit einer Kontaktfläche anordenbar ist. Hierdurch ist es in einfacher Weise möglich, den Elektromotor sicher auf dem Halterahmen anzuordnen.

Damit der Halterahmen nicht innerhalb des Gehäuses des Kraftfahrzeugaktuators beweglich ist und für eine ungewollte Geräuschentwicklung sorgen könnte, ist es erfindungsgemäß vorgesehen, dass an die Halteeinrichtung eine Stütze angeformt ist, die sich direkt an dem als Grundträger ausgebildeten Gehäusedeckel abstützt und dort in einer entsprechenden Halterung beziehungsweise Stützenaufnahme auch sicher gehalten ist.

Damit der Elektromotor auch sicher verschiebe- und drehfest auf der Halteeinrichtung des Halterahmens anordenbar ist, sind an der Halteeinrichtung Fixierungselemente angeordnet, die mit Gegenfixierungselementen des Elektromotors korrespondieren. Vorzugsweise sind diese Fixierungselemente und Gegenfixierungselemente formschlüssig zueinander ausgebildet.

Damit der Elektromotor mit der Drehmomentübertragungseinrichtung in Wirkverbindung gebracht werden kann, ist es vorgesehen, dass die Halteeinrichtung eine Öffnung aufweist, durch welche eine Antriebswelle des Elektromotors mit einem auf ihr angeordneten Antriebszahnrad durchsteckbar ist.

Weiterhin hat es sich als vorteilhaft erwiesen, dass das Getriebe des Kraftfahrzeugaktuators als Planetengetriebe ausgebildet ist. Hierdurch ist ein sehr kompaktes Getriebe zur Verfügung gestellt, so dass der gesamte Kraftfahrzeugaktuator relativ klein baut.

Nach einer weiteren vorteilhaften Ausgestaltung der Erfindung ist die Drehmomentübertragungseinrichtung als Doppelzahnrad ausgebildet. Ein derartiges Doppelzahnrad hat den Vorteil, dass auf relativ kleinem Bauraum die Wirkverbindung der Drehmomentübertragungseinrichtung sowohl mit dem Elektromotor als auch mit dem Getriebe erzielt werden kann.

Dabei hat es sich weiterhin als vorteilhaft erwiesen, dass an dem Gehäusedeckel Auflagen vorgesehen sind, an denen sich die Dämpfungs- und/oder Federelemente des Halterahmens beziehungsweise des Grundrahmens abstützen können, so dass der Grundrahmen kontaktfrei über der als Doppelzahnrad ausgebildeten Drehmomentübertragungseinrichtung angeordnet ist. Der Elektromotor kann somit über seine Antriebswelle und das daran angeordnete Antriebszahnrad einfach in Wirkverbindung mit dem Doppelzahnrad gebracht werden, ohne dass der Grundrahmen des Halterahmens oder ein sonstiges Bauteil des Halterahmens mit dem Doppelzahnrad in Kontakt steht, was während des Betriebes wiederum zu einer Geräuschbildung führen könnte.

Damit das Doppelzahnrad in einfacher Weise das Drehmoment auf das Getriebe übertragen kann, ist es weiter vorgesehen, dass das Doppelzahnrad zum einen mit dem Antriebszahnrad des Elektromotors und zum anderen mit einem Stirnzahnrad, das auf einer Antriebswelle des Getriebes angeordnet ist, in Wirkverbindung steht.

Weitere Ziele, Vorteile, Merkmale und Anwendungsmöglichkeiten der vorliegenden Erfindung ergeben sich aus der nachfolgenden Beschreibung eines Ausführungsbeispieles anhand der Zeichnung. Dabei bilden alle beschriebenen und/oder bildlich dargestellten Merkmale für sich oder in beliebiger sinnvoller Kombination den Gegenstand der vorliegenden Erfindung, auch unabhängig von ihrer Zusammenfassung in den Ansprüchen oder deren Rückbeziehung.

Es zeigen:
- Figur 1: ein Ausführungsbeispiel eines erfindungsgemäßen Kraftfahrzeugaktuators in einer Explosionsdarstellung,
- Figur 2: den Kraftfahrzeugaktuator gemäß Figur 4 in einer Querschnittdarstellung,
- Figur 3: eine Detaildarstellung der Figur 1 im Bereich des Halterahmens und
- Figur 4: den Gehäusedeckel des Ausführungsbeispiels der Figuren 1 und 2 mit bereits darin angeordneten Bauteilen.

Die Figuren zeigen ein Ausführungsbeispiel eines erfindungsgemäßen Kraftfahrzeugaktuators, welcher vorliegend als Bremsaktuator ausgestaltet ist.

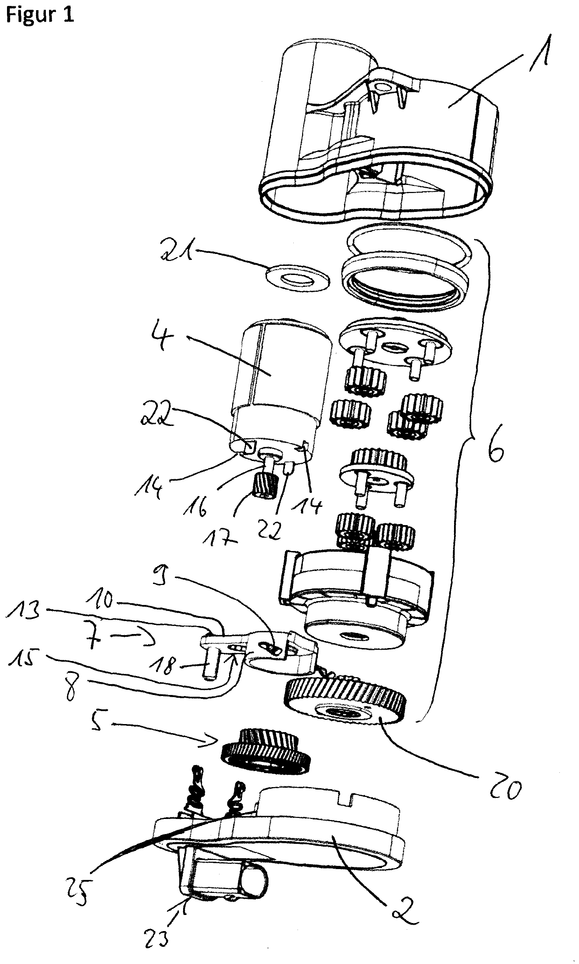

In der Explosionsdarstellung der Figur 1 sind die einzelnen Elemente beziehungsweise Bauteile des Kraftfahrzeugaktuators zu erkennen. Im Wesentlichen besteht dabei das Gehäuse 3 aus dem Gehäusedeckel 2 und der Aufnahme 1 mit den im Gehäuse 3 weiter angeordneten, im Folgenden beschriebenen Bauteilen des Kraftfahrzeugaktuators.

Auf dem Grundträger 2 ist auf einem Lager 25 eine Drehmomentübertragungseinrichtung 5 angeordnet, welche vorliegend als Doppelzahnrad ausgebildet ist. Über dieser Drehmomentübertragungseinrichtung 5 ist vorliegend ein Halterahmen 7 angeordnet. Dieser Halterahmen 7 besteht im Wesentlichen aus einer Halteeinrichtung 10 mit daran angeordnetem Grundrahmen 8, wobei der Grundrahmen 8 zur Anordnung über der Drehmomentübertragungseinrichtung 5 ausgebildet und die Halteeinrichtung 10 unter dem Elektromotor 4 angeordnet ist.

Die Halteeinrichtung 10 weist eine Öffnung 15 auf, durch welche eine Antriebswelle 16 des Elektromotors 4 mit darauf angeordnetem Antriebszahnrad 17 durchsteckbar ist. Ferner weist die Halteeinrichtung 10 eine zum Gehäusedeckel 2 gerichtete Stütze 18 auf, welche sich im montierten Zustand an dem Gehäusedeckel 2 abstützt und dabei in einer Stützenaufnahme 24 gehalten ist. An dem Grundrahmen 8 des Halterahmens 7 sind Dämpfungs- und/oder Federelemente 9 angeformt. Weiterhin befindet sich auf der Halteeinrichtung 10 eine Anlagefläche 11, auf die der Elektromotor 4 mit einer Kontaktfläche 12 abgestellt werden kann.

Damit der Elektromotor 4 gegenüber dem Halterahmen 7 dreh- und verschiebefest fixiert ist, sind an dem Halterahmen 7 beziehungsweise der Halteeinrichtung 10 Fixierungselemente 13 angeformt, die mit Gegenfixierungselementen 14 des Elektromotors 4 entsprechend korrespondieren, so dass sie vorzugsweise formschlüssig ineinander greifen und somit ein Verdrehen und Verschieben des Elektromotors 4 auf dem Halterahmen 7 verhindern.

Alle zuvor beschriebenen einzelnen Teile des Halterahmens 7 sind dabei einstückig mit diesem ausgebildet. Das heißt der Halterahmen 7 ist als einstückiges Teil mit dem Grundrahmen 8, den Dämpfungs- und/oder Federelementen 9, Halteeinrichtung 10 mit Anlagefläche 11 und den Fixierungselementen 13 sowie der Stütze 18 ausgebildet und dabei vorzugsweise als Spritzgussteil aus Kunststoff hergestellt.

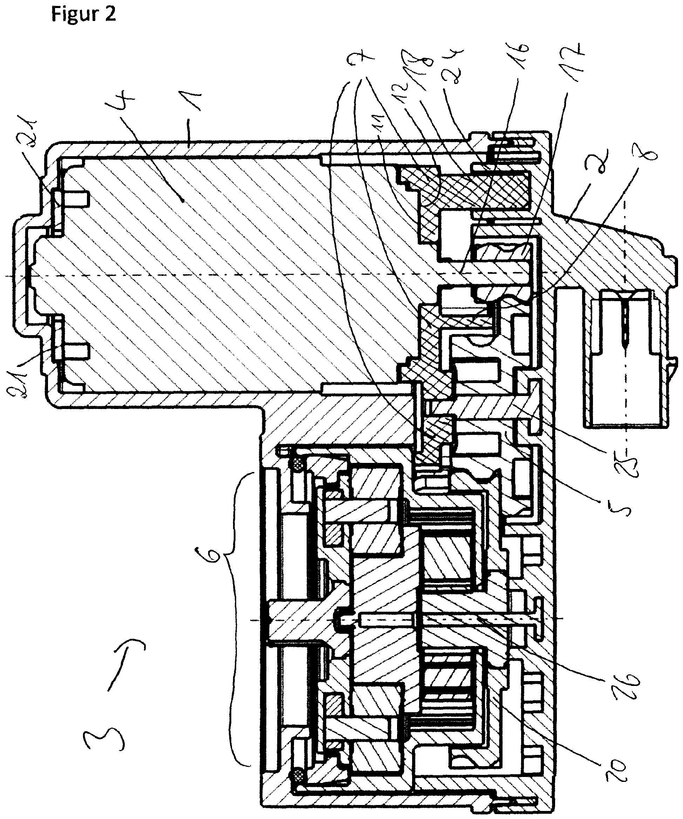

Wie insbesondere der Figur 2 zu entnehmen, ist der Elektromotor 4 nach oben gegenüber der Aufnahme des Gehäuses 1 durch einen zwischenliegenden Isolator 21 getrennt. Dieser Isolator 21 dient im Wesentlichen dazu, Schwingungen und Bewegungen zwischen der Gehäuseaufnahme 1 und dem Elektromotor 4 abzufedern beziehungsweise zu dämpfen. An seinem anderen Ende liegt der Elektromotor 4 mit seiner Kontaktfläche 12 auf der Abstell- bzw. Anlagefläche 11 der Halteeinrichtung 10 des Halterahmens 7 auf. Mit seiner Antriebswelle 16 und daran angeordnetem Antriebszahnrad 17 ist der Motor dabei durch die Öffnung 15 der Halteeinrichtung 10 geführt und kämmt mit seinem Antriebszahnrad 17 mit der als Doppelzahnrad ausgeführten Drehmomentübertragungseinrichtung 5. Die Drehmomentübertragungseinrichtung 5 ist auf einem Lager 25 gelagert und kämmt andererseits auch mit einem Stirnzahnrad 20, welches ebenfalls mittels eines weiteren Lagers 26 an dem Gehäusedeckel 2 angeordnet ist. Dieses Stirnrad 20 ist mit der Antriebswelle des Getriebes 6, welches vorliegend als Planetengetriebe ausgebildet ist, wirkverbunden. Mittels der in den Figuren nicht näher angezogenen Abtriebswelle dieses Getriebes kann der Kraftfahrzeugaktuator die gewünschten Bewegungen ausführen.

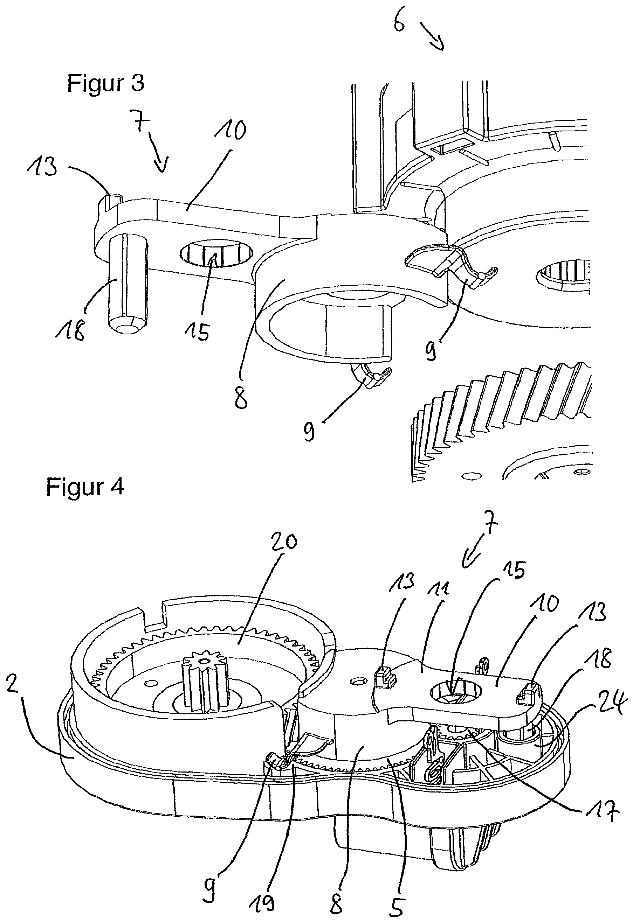

In den Figuren 3 und 4 ist der für die Erfindung wesentliche Halterahmen 7 detaillierter dargestellt.

Dabei zeigt Figur 3 den Halterahmen 7 der Figur 1 in vergrößerter Darstellung. Besonders deutlich sind hierbei die einzelnen Elemente zu erkennen. Insbesondere wie an dem Grundrahmen 8 des Halterahmens 7 die Dämpfungs- und/oder Federelemente 9 sowie die Halteeinrichtung 10 angeformt sind. Deutlich zu erkennen sind dabei auch die an der Halteeinrichtung 10 angeordneten Stütze 18 und ein Fixierungselement 13, welches mit einem Gegenfixierungselement 14 des Elektromotors 4, die hier allerdings nicht gezeigt sind, zusammen wirken.

In der Figur 4 ist nunmehr dargestellt, wie dieser Halterahmen 7 in den als Grundträger ausgebildeten Gehäusedeckel 2 montiert ist. Dabei ist in dem Gehäusedeckel 2 auch bereits das Stirnrad 20 angeordnet, welches einerseits mit der Antriebswelle des Getriebes 6 und andererseits auch mit der Drehmomentübertragungseinrichtung 5 wirkverbunden ist, wobei die Drehmomentübertragungsvorrichtung 5 vorliegend als Doppelzahnrad ausgebildet ist und in der Darstellung der Figur 4 ebenfalls bereits in den als Grundträger ausgebildeten Gehäusedeckel 2 montiert ist. Auf diese Drehmomentübertragungseinrichtung 5 ist in der Darstellung gemäß Figur 4 bereits der Halterahmen 7 aufgesetzt, wobei dieser allerdings nicht die Drehmomentübertragungseinrichtung 5 kontaktiert. Der Halterahmen 7 ist zwar mit seinem Grundrahmen 8 oberhalb der Drehmomentübertragungseinrichtung 5 angeordnet, wird aber durch die Dämpfungs- und/oder Federelemente 9, welche sich an Auflagen 19 des Gehäusedeckels 2 abstützen, auf Abstand zur Drehmomentübertragungseinrichtung 5 gehalten. Die Stütze 18 der Halteeinrichtung 10 des Halterahmens 7 ist dabei bereits in die Stützenaufnahme 24 des Gehäusedeckels 2 aufgenommen, so dass der gesamte Halterahmen 7 fest im Gehäusedeckel 2 fixiert ist. Die Stütze 18 kontaktiert den Boden des Gehäusedeckels 2, so dass ein direkter Kontakt des Gehäusedeckels 2 mit der Stütze 18 vorliegt.

In der Darstellung gemäß Figur 4 ist auch das Antriebszahnrad 17 zu erkennen, das auf die Antriebswelle 16 des Elektromotors 4 aufgesteckt ist. Allerdings wurde hierbei auf die Darstellung des Elektromotors 4 verzichtet, damit die einzelnen Funktionselemente des Halterahmens 7 deutlicher zu erkennen sind.

Nachdem der Kraftfahrzeugaktuator gemäß der Figur 4 bereits vormontiert ist, muss nunmehr noch der Elektromotor 4 mit seiner Kontakt- bzw. Stellfläche 12 auf die Anlage- bzw. Abstellfläche 11 der Halteeinrichtung 10 des Halterahmens 7 aufgesetzt werden. Um den Elektromotor 4 dabei gegen ein Verdrehen zu sichern, sind die Fixierungselemente 13 auf der Halteeinrichtung 10 vorgesehen, die vorzugsweise formschlüssig mit Gegenfixierungselementen 14 des Elektromotors zusammen wirken.

Nachdem der Elektromotor 4 nunmehr auf die Halteeinrichtung 10 des Halterahmens 7 aufgesetzt wurde, kann abschließend der Gehäusebehälter 1 auf den Gehäusedeckel 2 aufgesetzt und das Gesamtgehäuse 3 verschlossen werden. Durch die auf den Auflagen 19 des Gehäusedeckels 2 aufliegenden Dämpfungs- und/oder Federelementen 9 des Halterahmens 7 können Bewegungen und Schwingungen des Elektromotors 4 innerhalb des Gehäuses 3 abgefangen, das heißt abgefedert und/oder gedämpft werden. Dadurch entsteht keine Geräuschentwicklung durch derartige Bewegungen und Schwingungen des Elektromotors 4, wobei der Grundrahmen 8 des Halterahmens 7 immer auf Abstand zur Drehmomentübertragungseinrichtung 5 gehalten wird.

Während des gesamten Betriebes dieses Kraftfahrzeugaktuators ist daher sichergestellt, dass durch die Feder- und Dämpfungseigenschaften des Halterahmens 7 einer Geräuschbildung entgegengewirkt wird.

### Bezugszeichenliste

- 1: Aufnahme
- 2: Gehäusedeckel
- 3: Gehäuse
- 4: Elektromotor
- 5: Drehmomentübertragungseinrichtung
- 6: Getriebe
- 7: Halterahmen
- 8: Grundrahmen
- 9: Dämpfungs- und/oder Federelement
- 10: Halteinrichtung
- 11: Anlagefläche
- 12: Kontaktfläche
- 13: Fixierungselement
- 14: Gegenfixierelement
- 15: Öffnung
- 16: Antriebswelle
- 17: Antriebszahnrad
- 18: Stütze
- 19: Auflage
- 20: Stirnzahnrad
- 21: Isolator
- 22: Stecker
- 23: elektrischer Anschluss
- 24: Stützenaufnahme
- 25: Lager
- 26: Lager

## Patentansprüche

1. Kraftfahrzeugaktuator, insbesondere Bremsaktuator, mit einem aus einer Aufnahme (1) und einem als Grundträger ausgebildeten Gehäusedeckel (2) bestehenden Gehäuse (3), in dem ein Elektromotor (4) und ein damit über eine Drehmomentübertragungseinrichtung (5) gekoppeltes Getriebe (6) angeordnet sind, wobei zur Anordnung des Elektromotors (4) innerhalb des Gehäuses (3) ein auf dem Gehäusedeckel (2) anordenbarer Halterahmen (7) vorgesehen ist, wobei der Halterahmen (7) als Dämpfungs- und/oder Federeinrichtung ausgebildet ist, und einen Grundrahmen (8) aufweist, an den wenigstens ein Dämpfungs- und/oder Federelement (9) angeformt ist, **wobei** das wenigstens eine Dämpfungs- und/oder Federelement (9) einstückig mit dem Grundrahmen (8) ausgebildet ist, wobei der Halterahmen (7) eine Halteeinrichtung (10) für den Elektromotor aufweist, **dadurch gekennzeichnet, dass** an die Halteeinrichtung (10) eine Stütze (18) angeformt ist, die sich direkt an dem als Grundträger ausgebildeten Gehäusedeckel (2) abstützt.

2. Kraftfahrzeugaktuator nach Anspruch 1, **dadurch gekennzeichnet, dass** die Halteeinrichtung (10) eine Anlagefläche (11) aufweist, auf welcher der Elektromotor (4) mit einer korrespondierenden Kontaktfläche (12) anordenbar ist.

3. Kraftfahrzeugaktuator nach einem der Ansprüche 1 oder 2, **dadurch gekennzeichnet, dass** die Halteeinrichtung (10) Fixierungselemente (13) aufweist, die in Montagestellung mit Gegenfixierelementen (14) des Elektromotors (4) korrespondieren.

4. Kraftfahrzeugaktuator nach einem der Ansprüche 1 bis 3, **dadurch gekennzeichnet, dass** die Halteeinrichtung (10) eine Öffnung (15) aufweist, durch welche eine Antriebswelle (16) des Elektromotors (4) mit darauf angeordnetem Antriebszahnrad (17) durchsteckbar ist.

5. Kraftfahrzeugaktuator nach einem der vorhergehenden Ansprüche, **dadurch gekennzeichnet, dass** das Getriebe (6) als Planetengetriebe ausgebildet ist.

6. Kraftfahrzeugaktuator nach einem der vorhergehenden Ansprüche, **dadurch gekennzeichnet, dass** die Drehmomentübertragungseinrichtung (5) als Doppelzahnrad ausgebildet ist.

7. Kraftfahrzeugaktuator nach Anspruch 6, **dadurch gekennzeichnet, dass** an dem Gehäusedeckel (2) Auflagen (19) vorgesehen sind, an denen sich die Dämpfungs-und/oder Federelemente (9) abstützen, sodass der Grundrahmen (8) kontaktfrei über der als Doppelzahnrad ausgebildeten Drehmomentübertragungseinrichtung (5) angeordnet ist.

8. Kraftfahrzeugaktuator nach Anspruch 6 oder 7, **dadurch gekennzeichnet, dass** das Doppelzahnrad zum einen mit dem auf der Antriebswelle (16) des Elektromotors (1) angeordneten Antriebszahnrad (17) und zum anderen mit einem auf einer Antriebswelle des Getriebes (6) angeordneten Stirnzahnrad (20) in Wirkverbindung steht.

9. Kraftfahrzeugaktuator nach einem der vorhergehenden Ansprüche, **dadurch gekennzeichnet, dass** das wenigstens eine Dämpfungs- und/oder Federelement (9) als Federzunge ausgebildet ist.

## Claims

1. Motor vehicle actuator, in particular brake actuator, with a housing (3) that consists of a reception area (1) and a housing cover (2) that is configured as a base support, and inside of which an electric motor (4) and a gear (6) that is coupled to the same via a torque transmission appliance (5) are arranged, wherein a holding frame (7) that can be arranged on the housing cover (2) is provided for arranging the electric motor (4) inside the housing (3), wherein the holding frame (7) is embodied as a damping and/or spring element and has a base frame (8) at which at least one damping and/or spring element (9) is formed, wherein the at least one damping and/or spring element (9) is formed in one piece with the base frame (8), wherein the holding frame (7) has a holding device (10) for the electric motor, **characterized in that** a support (18) is formed at the holding device (10), being supported directly at the housing cover (2) that is embodied as a base support.

2. Motor vehicle actuator according to claim 1, **characterized in that** the holding device (10) has a support surface (11) on which the electric motor (4) can be arranged with a corresponding contact surface (12) .

3. Motor vehicle actuator according any of the claims 1 or 2, **characterized in that** the holding device (10) has fixing elements (13) which correspond to counter fixing elements (14) of the electric motor (4) in the mounting position.

4. Motor vehicle actuator according to any of the claims 1 to 3, **characterized in that** die holding device (10) has an opening (15) through which a drive shaft (6) of the electric motor (4) with a pinion gear drive (17) arranged thereon can be passed.

5. Motor vehicle actuator according to any of the preceding claims, **characterized in that** the gear (6) is embodied as a planetary gear.

6. Motor vehicle actuator according to any of the preceding claims, **characterized in that** the torque transmission appliance (5) is embodied as a double gear wheel.

7. Motor vehicle actuator according to claim 6, **characterized in that** support elements (19) at which the damping and/or spring elements (9) are supported are provided at the housing cover (2), so that the base frame (8) is arranged in a non-contact manner above the torque transmission appliance (5) that is embodied as a double gear wheel.

8. Motor vehicle actuator according to claim 6 or 7, **characterized in that**, for one thing, the double gear wheel is in operative connection with the pinion gear drive (17) that is arranged on the drive shaft (16) of the electric motor (1) and, for another, with a spur gear wheel (20) that is arranged on a drive shaft of the gear (6).

9. Motor vehicle actuator according to any of the preceding claims, **characterized in that** the at least one damping and/or spring element (9) is embodied as a spring tongue.

## Revendications

1. Actionneur de véhicule automobile, en particulier actionneur de frein, comprenant un boîtier (3) constitué d'un logement (1) et d'un couvercle de boîtier (2) réalisé sous forme de support de base, dans lequel sont disposés un moteur électrique (4) et une transmission (6) accouplée à celui-ci par le biais d'un dispositif de transfert de couple (5), un cadre de retenue (7) pouvant être disposé sur le couvercle de boîtier (2) étant prévu à l'intérieur du boîtier (3) pour l'agencement du moteur électrique (4), le cadre de retenue (7) étant réalisé sous forme de dispositif d'amortissement et/ou à ressort, et présentant un cadre de base (8), au niveau duquel est façonné au moins un élément d'amortissement et/ou de ressort (9), l'au moins un élément d'amortissement et/ou de ressort (9) étant réalisé d'une seule pièce avec le cadre de base (8), le cadre de retenue (7) présentant un dispositif de retenue (10) pour le moteur électrique, **caractérisé en ce qu'**un support (18) est façonné sur le dispositif de retenue (10), lequel s'appuie directement sur le couvercle de boîtier (2) réalisé sous forme de support de base.

2. Actionneur de véhicule automobile selon la revendication 1, **caractérisé en ce que** le dispositif de retenue (10) présente une surface d'appui (11) sur laquelle peut être disposé le moteur électrique (4) avec une surface de contact correspondante (12).

3. Actionneur de véhicule automobile selon l'une quelconque des revendications 1 ou 2, **caractérisé en ce que** le dispositif de retenue (10) présente des éléments de fixation (13) qui, dans la position de montage, sont en correspondance avec des éléments de fixation conjugués (14) du moteur électrique (4).

4. Actionneur de véhicule automobile selon l'une quelconque des revendications 1 à 3, **caractérisé en ce que** le dispositif de retenue (10) présente une ouverture (15) à travers laquelle un arbre d'entraînement (16) du moteur électrique (4) peut être enfoncé avec une roue dentée d'entraînement (17) disposée sur celui-ci.

5. Actionneur de véhicule automobile selon l'une quelconque des revendications précédentes, **caractérisé en ce que** la transmission (6) est réalisée sous forme d'engrenage planétaire.

6. Actionneur de véhicule automobile selon l'une quelconque des revendications précédentes, **caractérisé en ce que** le dispositif de transfert de couple (5) est réalisé sous forme de roue dentée double.

7. Actionneur de véhicule automobile selon la revendication 6, **caractérisé en ce que** des appuis (19) sont prévus sur le couvercle de boîtier (2), au niveau desquels s'appuient les éléments d'amortissement et/ou de ressort (9), de sorte que le cadre de base (8) soit disposé sans contact pardessus le dispositif de transfert de couple (5) réalisé sous forme de roue dentée double.

8. Actionneur de véhicule automobile selon la revendication 6 ou 7, **caractérisé en ce que** la roue dentée double est en liaison fonctionnelle d'une part avec la roue dentée d'entraînement (17) disposée sur l'arbre d'entraînement (16) du moteur électrique (1) et d'autre part avec une roue dentée frontale (20) disposée sur un arbre d'entraînement de la transmission (6).

9. Actionneur de véhicule automobile selon l'une quelconque des revendications précédentes, **caractérisé en ce que** l'au moins un élément d'amortissement et/ou de ressort (9) est réalisé sous forme de langue à ressort.
